# DEMANDE DE BREVET EUROPEEN

(11) **EP 1 266 564 A1**
(43) Date de publication de la demande: **18.12.2002**
(21) Numéro de dépôt: 02352013.3
(22) Date de dépôt: 12.06.2002
(51) Int. Cl.: A01K 1/01

(54) **Dispositif et installation pour le nettoyage dynamique d'une aire de stabulation**

(30) Priorité: 15.06.2001 FR 0107895
(71) Demandeur: U.L.P.A.C., Société Coopérative Agricole, Union.Laitiere Pyrenées Aquitaine Charentes, 31018 Toulouse Cédex 2 (FR)
(72) Inventeur: Lapeyre, Jacques, 11270 Fanjeaux (FR)
(74) Mandataire: Ravina, Bernard

(57) **Abrégé**

L'invention a pour objet un dispositif et une Installation pour le nettoyage dynamique d'une aire (1) de stabulation.

Cette installation comporte au moins un ensemble (3,3') de projection dynamique sous pression du liquide de nettoyage, comprenant une réserve (5) d'un conduit (6) en communication avec une source (4) d'un liquide de nettoyage sous pression, ce conduit (6) étant pourvu d'au moins une buse (9) de projection, et des moyens (7,7') d'entraînement du conduit (6) le long d'un organe de guidage (8) orienté suivant l'une quelconque des dimensions de l'aire (1) à nettoyer. L'organe de guidage (8) du conduit (6) est disposé au sol de manière à projeter le liquide de nettoyage tangentiellement à celui-ci. L'entraînement du conduit (6) s'effectue au moyen d'un train de roues à gorge disposé en aval d'un tambour d'enroulement du conduit (6).

## Description

L'invention est du domaine des équipements des aires de stabulation bâties pour animaux d'élevage, et elle a pour objet un dispositif et une installation pour le nettoyage du sol de ces aires de stabulation.

On rappelle qu'une aire de stabulation bâtie comprend principalement une dalle ou analogue, souvent porteuse d'une enceinte rehaussée d'une toiture pour former un bâtiment. Un problème à résoudre réside dans le nettoyage fréquent et régulier de cette dalle, qui est notamment souillée par les déjections des animaux. Ce nettoyage s'effectue couramment par projection sous pression d'un liquide de nettoyage, tel que de l'eau souvent chargée d'un agent désinfectant. Ce liquide et les souillures décollées du sol sont ensuite évacués vers un réseau d'assainissement. La dalle comporte à cet effet un réseau de collecte des souillures entraînées par le liquide projeté, comprenant au moins un canal incliné enfoui dans la dalle, et au moins une pente conférée à celle-ci pour l'acheminement du liquide de nettoyage projeté vers le canal.

Ce nettoyage est souvent effectué manuellement par des opérateurs à l'aide de moyens portatifs de projection d'eau. Pour éviter cette contrainte, il a été proposé d'automatiser cette opération. On pourra notamment se reporter au document WO00036904 (SANDBERG) qui décrit à cet effet un appareil mobile de projection d'eau.

Une difficulté à surmonter réside dans le fait que les moyens mis en oeuvre pour un nettoyage automatisé d'une aire de stabulation ne doivent pas encombrer inopportunément l'espace réservé aux animaux. Pour cela, il est proposé par WO00036904 un véhicule équipé de moyens de projection du liquide de nettoyage, et d'un bras télescopique articulé porteur d'une buse de projection du liquide.

L'avantage de cet appareil mobile est de permettre son retrait hors de l'espace réservé aux animaux, lorsque l'opération de nettoyage de la dalle a été effectuée. Par ailleurs cet appareil, qui comprend des moyens dynamiques de projection du liquide, c'est à dire des moyens pour déplacer la buse de projection le long de l'aire à nettoyer, offre la certitude que la quasi-totalité de la surface de cette aire est soumise à la projection du liquide.

Toutefois, cette solution n'est guère satisfaisante en ce qui concerne les coûts nécessaires à sa mise en oeuvre, tant pour la fabrication que pour l'entretien et l'utilisation du véhicule. En outre, l'encombrement au sol du véhicule ne facilite pas l'obtention du nettoyage de la surface complète de la dalle. Enfin, il est nécessaire de prévoir un emplacement pour le garage du véhicule.

Le but de la présente invention est de proposer un dispositif et une installation pour le nettoyage dynamique d'une aire de stabulation, dont l'encombrement ne fasse pas obstacle à la libre circulation des animaux. En outre, il est visé par l'invention de proposer un tel dispositif qui soit simple à mettre en oeuvre. Enfin, un autre but est de proposer un tel dispositif dont les coûts de fabrication, d'installation, d'entretien et d'utilisation ne soient pas rédhibitoires.

Le dispositif de la présente invention met en oeuvre au moins un ensemble de projection dynamique sous pression d'un liquide de nettoyage. Cet ensemble comprend au moins une buse disposée à l'extrémité distale d'un conduit relié à son autre extrémité, proximale, à une source d'alimentation en liquide sous pression. Le dispositif met aussi en oeuvre des moyens de mobilité de la buse pour son déplacement à proximité du sol le long de l'une au moins des dimensions de l'aire à nettoyer.

Selon la présente invention, les moyens de mobilité de la buse sont des moyens d'entraînement du conduit pour le déplacer, à partir d'une réserve, le long et entre les extrémités correspondantes proximale et distale d'un organe de guidage orienté suivant l'une quelconque des dimensions de l'aire à nettoyer.

On comprendra que le dispositif de l'invention est susceptible d'être composé de plusieurs ensembles de projection, selon la dimension et l'agencement de l'aire à nettoyer. Par exemple, un couple d'ensembles de projection peuvent être aboutés en vis à vis suivant une même dimension de l'aire à nettoyer, les réserves de conduits étant de préférence placées aux extrémités de cette aire. Par exemple encore, plusieurs ensembles de projection peuvent être répartis à équidistance les uns des autres suivant une dimension concourante à celle d'extension de l'organe de guidage du conduit.

On relèvera que dans ce cas et pour ne pas encombrer l'espace réservé aux animaux, l'organe de guidage du conduit est, selon un aspect avantageux de l'invention décrit plus loin, au moins partiellement noyé dans la dalle de l'aire à nettoyer.

Selon une forme préférée de réalisation de l'invention, l'organe de guidage du conduit est constitué d'un fourreau logeant celui-ci de manière coulissante. Ce fourreau comporte sur sa longueur une lumière pour le passage à son travers de la buse, et le guidage de cette dernière parallèlement à l'axe d'extension du fourreau.

On relèvera ainsi un aspect avantageux de l'invention proposée, qui consiste à installer à demeure l'ensemble de projection dynamique sous pression d'un liquide de nettoyage sans que celui-ci n'encombre outre mesure l'espace réservé aux animaux. En effet, les moyens encombrant du dispositif, notamment la réserve de conduit et les moyens de mise en relation de celui-ci avec la source de liquide sous pression, peuvent être placés à distance relative de l'aire à nettoyer, tandis que seuls le conduit équipé de la buse, et ses moyens de guidage, occupent l'espace réservé aux animaux. En outre, et selon un aspect encore plus avantageux de l'invention, l'organe de guidage constitués par le fourreau peut être au moins partiellement noyé dans la dalle au sol, pour ne faire sensiblement émerger que la buse.

C'est pourquoi et selon une forme avantageuse de réalisation de l'invention, le fourreau constitue un organe de positionnement de la buse au sol, pour y faire affleurer son débouché de manière à orienter le jet de projection du liquide sensiblement tangentiellement à la surface de l'aire à nettoyer.

Les moyens d'entraînement du conduit, quant à eux, sont de préférence du type à friction, comprenant au moins un organe motorisé exerçant une poussée longitudinale contre la périphérie du conduit.

Le conduit étant un conduit souple, de manière à être flexible pour permettre son enroulement autour d'un tambour, on relèvera que la pression du liquide qu'il véhicule lui confère alors une fermeté, qui est mise à profit pour l'utilisation de tels type de moyens pour son entraînement.

Cette solution présente l'avantage de simplifier et de limiter l'encombrement des moyens de mobilité de la buse.

On relèvera aussi que les moyens d'entraînement du conduit sont de préférence à double effet, pour provoquer respectivement tant le déploiement que le repliement du conduit à partir de la réserve.

La présente invention sera mieux comprise et des détails en relevant apparaîtront, à la description qui va en être faite d'une forme préférée de réalisation, en relation avec les figures de la planche annexée, dans laquelle :
la fig.1 est une vue schématique en perspective d'une installation de nettoyage selon un exemple de réalisation de l'invention,
la fig.2 est une vue schématique en coupe qui illustre un fourreau de guidage d'un conduit pourvu d'une buse de projection, selon un exemple de réalisation d'un dispositif de l'invention participant d'une installation illustrée sur la figure précédente,
la fig.3 est une vue schématique partielle de côté illustrant les moyens d'entraînement du conduit représenté sur la figure précédente, selon une forme préféré de réalisation d'un dispositif de l'invention.

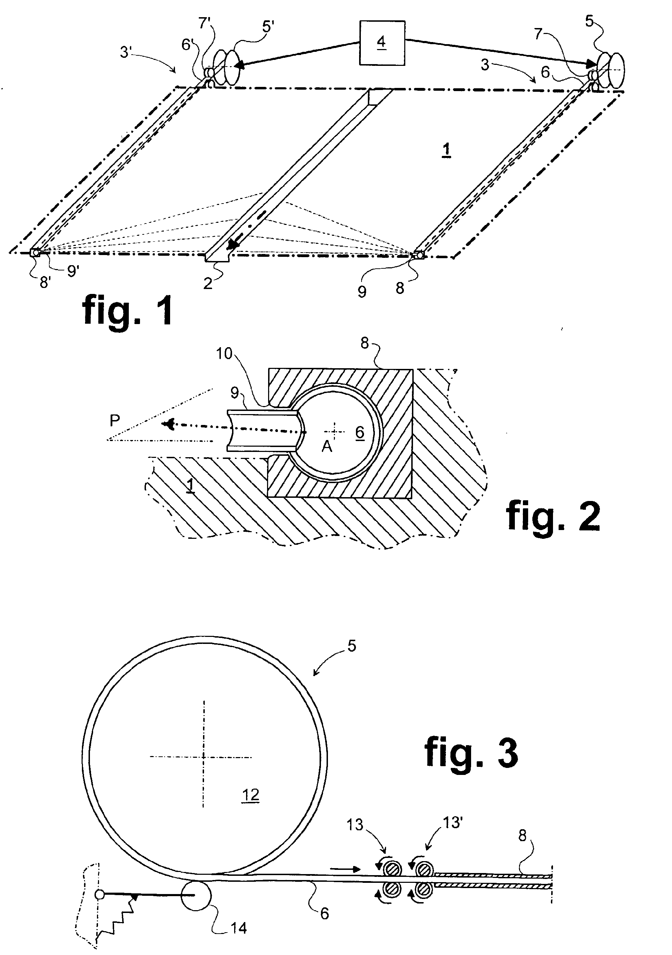

Sur la fig.1, une installation pour le nettoyage dynamique d'une aire 1 de stabulation comprend des moyens 4,6,9 de projection dynamique d'un liquide de nettoyage, et un réseau 2 de collecte, du liquide projeté et des souillures qu'il entraîne. Cette installation comporte au moins un ensemble 3,3' de projection dynamique sous pression du liquide de nettoyage. Chaque ensemble 3,3' comprend:
* ) Une source 4 d'alimentation sous pression en liquide de nettoyage. Cette source 4 est par exemple constituée de l'eau du réseau auquel est accessoirement joint un agent désinfectant. On comprendra que cette adjonction s'effectue par des moyens connus tels que par effet venturi. Par exemple encore, cette source 4 est constituée d'une réserve de liquide équipé de moyens de mise sous pression vers le conduit.
* ) Une réserve 5,5' de conduit 6,6', ce conduit étant en communication avec la source 4 de liquide et étant pourvu d'au moins une buse 9 de projection,
* ) des moyens 7,7' d'entraînement du conduit 6,6' le long d'un organe de guidage 8,8' orienté suivant l'une quelconque des dimensions de l'aire 1 à nettoyer.

En se reportant sur la fig.2, l'organe de guidage du conduit 6 est constitué d'un fourreau 8, qui comporte une fente longitudinale 10 pour le passage et le guidage d'une buse 9. On remarquera que le fourreau 8 est par exemple formé à partir d'un profilé, dont la section est grosso-modo conformée en U à bord retourné. Le fourreau 8 est au moins partiellement noyé dans le sol de la dalle 1, de manière à faire affleurer le débouché 11 de la buse 9, qui projette le liquide sensiblement tangentiellement au sol.

On remarque aussi sur cette figure que le débouché 11 de la buse 9 est de préférence sensiblement incliné dans le plan P de projection du liquide par rapport à l'axe général A d'extension de l'organe de guidage 8 du conduit 6. Ces dispositions visent à favoriser l'entraînement du conduit 6 le long de l'organe de guidage 8, dans le sens correspondant, sous l'effet de la pression de l'eau projetée au sol. On comprendra que le débouché 11 de la buse 9 est incliné dans le plan P de projection d'eau préférentiellement vers la réserve 5 de conduit 6, pour favoriser l'entraînement de ce dernier à l'éloignement de la réserve 5. On relèvera aussi qu'en raison de cette inclinaison du débouché 11 de la buse 9, les moyens 4,6,9 de projection du liquide participent avantageusement des moyens de mobilité de la buse 9.

En se reportant sur la fig.3, la réserve 5 de conduit 6 est enroulée autour d'un tambour 12 disposé en amont d'un organe motorisé 13,13' d'entraînement du conduit 6. Ce tambour 12 est équipé d'un galet presseur 14 pour le maintien du conduit 6 à sa périphérie.

L'organe motorisé d'entraînement du conduit 6 est constitué par un train de roues à gorges antagonistes 13,13', qui sont disposées de part et d'autre du conduit 6 qu'elles reçoivent en fond de gorge.

## Revendications

1. Dispositif pour le nettoyage d'une aire (1) de stabulation, ce dispositif mettant en oeuvre au moins un ensemble (3,3') de projection dynamique sous pression d'un liquide de nettoyage, qui comprend au moins une buse (9,9') disposée à l'extrémité distale d'un conduit (6) relié à son autre extrémité, proximale, à une source (4) d'alimentation en liquide sous pression, le dispositif mettant aussi en oeuvre des moyens (7,6) de mobilité de la buse (9) pour son déplacement à proximité du sol le long de l'une des dimensions de l'aire (1) à nettoyer, **caractérisé :**
**en ce que** les moyens de mobilité de la buse (9) sont des moyens d'entraînement (7,7') du conduit (6) pour le déplacer, à partir d'une réserve (5), le long et entre les extrémités correspondantes proximale et distale d'un organe de guidage (8,8') orienté suivant l'une quelconque des dimensions de l'aire (1) à nettoyer.

2. Dispositif selon la revendication 1, **caractérisé :**
**en ce que** l'organe de guidage du conduit (6) est constitué d'un fourreau (8) logeant celui-ci de manière coulissante, ce fourreau (8) comportant sur sa longueur une lumière (10) pour le passage à son travers de la buse (9), et le guidage de cette dernière parallèlement à l'axe d'extension A du fourreau (8).

3. Dispositif selon la revendication 2, **caractérisé :**
**en ce que** le fourreau (8) constitue un organe de positionnement de la buse (9) au sol, pour y faire affleurer son débouché (11) de manière à orienter le jet de projection du liquide sensiblement tangentiellement à la surface de l'aire (1) à nettoyer.

4. Dispositif selon l'une quelconque des revendications précédentes, **caractérisé :**
**en ce que** le débouché (11) de la buse (9) est sensiblement incliné dans le plan P de projection du liquide par rapport à l'axe général A d'extension de l'organe de guidage (8) du conduit (6), de manière à favoriser l'entraînement du conduit le long de celui-ci dans le sens correspondant, sous l'effet de la pression de l'eau projetée au sol.

5. Dispositif selon l'une quelconque des revendications précédentes, **caractérisé :**
**en ce que** les moyens d'entraînement (7) du conduit (6) sont du type à friction, comprenant au moins un organe motorisé (13,13') exerçant une poussée longitudinale contre la périphérie du conduit (6).

6. Dispositif selon la revendication 5, **caractérisé :**
**en ce que** l'organe motorisé (13,13') est constitué par un train de roues à gorges antagonistes, qui sont disposées de part et d'autre du conduit (6) qu'elles reçoivent en fond de gorge.

7. Dispositif selon l'une quelconque des revendications 5 et 6, **caractérisé :**
**en ce que** la réserve (5) de conduit (6) est enroulée autour d'un tambour (12) disposé en amont de l'organe motorisé (13,13') d'entraînement du conduit (6).

8. Dispositif selon la revendication 7, **caractérisé :**
**en ce que** le tambour (12) est équipé d'un galet presseur (14) pour le maintien du conduit (6) à sa périphérie.

9. Installation pour le nettoyage dynamique d'une aire (1) de stabulation selon l'une quelconque des revendications précédentes, la dite installation comprenant un réseau (2) de collecte du liquide projeté, et des moyens (4,7,9) de projection dynamique d'un liquide de nettoyage, **caractérisée :**
**en ce qu'**elle comporte au moins un ensemble (3,3') de projection dynamique sous pression du liquide de nettoyage, comprenant :
a) Une source (4) d'alimentation sous pression en liquide de nettoyage,
b) une réserve (5) de conduit (6), ce conduit (6) étant en communication avec la source (4) de liquide et étant pourvu d'au moins une buse (9) de projection, et
c) des moyens (7,7') d'entraînement du conduit (6) le long d'un organe de guidage (8) orienté suivant l'une quelconque des dimensions de l'aire (1) à nettoyer.

10. Installation selon la revendication 9, **caractérisée :**
**en ce que** l'ensemble (3,3') de projection dynamique sous pression du liquide de nettoyage est installé à demeure, l'organe de guidage (8) du conduit (6) étant au moins partiellement noyé dans la dalle au sol, pour ne faire sensiblement émerger que la buse (9).
